# FASCICULE DE BREVET EUROPEEN

(11) **EP 4 331 824 B1**
(45) Date de publication et mention de la délivrance du brevet: **09.07.2025**
(21) Numéro de dépôt: 23190397.2
(22) Date de dépôt: 08.08.2023
(51) Int. Cl.: B29D 99/00, A47C 27/12, D04H 3/14

(54) **PROCÉDÉ DE FABRICATION D'UNE MATELASSURE DE SIÈGE ET MATELASSURE DE SIÈGE EN TANT QUE TELLE**
VERFAHREN ZUR HERSTELLUNG EINER SITZPOLSTERUNG UND SITZPOLSTERUNG ALS SOLCHE
METHOD FOR MANUFACTURING A SEAT PADDING AND SEAT PADDING AS SUCH

(30) Priorité: 31.08.2022 FR 2208747
(43) Date de publication de la demande: 06.03.2024
(73) Titulaire: FAURECIA Sièges d'Automobile, 92000 Nanterre (FR); Indorama Ventures Mobility Obernburg GmbH, 63784 Obernburg (DE)
(72) Inventeur: CLUET, Mathieu, 91150 ETAMPES (FR); GAZANIOL, Benoît, 91290 ARPAJON (FR)
(74) Mandataire: Plasseraud IP

(56) Documents cités:
- JP-A- 2003 250 667
- US-A1- 2007 086 612
- US-A1- 2013 020 016

## Description

La présente divulgation est relative à un procédé de fabrication d'une matelassure de siège comprenant un enchevêtrement 3D de fibres thermoplastiques, continues disposées irrégulièrement typiquement aléatoirement formant des boucles soudées entre elles, présentant de manière notable des zones locales renforcées et densifiées.

La présente divulgation concerne encore une matelassure en tant que telle susceptible d'être obtenue par le procédé selon la présente divulgation, ainsi qu'un siège comprenant une telle matelassure et une coiffe fixée à la matelassure en la ou les zones locales densifiées et rigidifiées.

### Domaine technique

La présente divulgation relève du domaine des sièges de véhicules automobiles qui comprennent une structure typiquement métallique, avec typiquement un châssis d'assise et un châssis de dossier. La structure est classiquement obtenue par les techniques d'emboutissage. Les sièges comportent encore des matelassures, y compris une couche de matelassure d'assise et une couche de matelassure de dossier qui confèrent le moelleux de l'assise et du dossier, et participent au confort au siège. Ces matelassures sont habillées par des coiffes recouvrant les matelassures et qui peuvent être typiquement fixé à des inserts de fixation, internes à la matelassure.

### Technique antérieure

Les matelassures d'assise et de dossier sont classiquement en mousse de polymère d'uréthane, et mises en forme dans des moules. La matelassure en polyuréthane est classiquement recouverte d'une coiffe Des inserts de fixation servant à la fixation de la coiffe sont piégés dans la mousse, par surmoulage. Les matelassures en mousse de polyuréthane donnent satisfaction, mais peuvent en condition humide, conserver l'humidité.

US 20130020016 A1 divulgue une structure 3D de fibres mise en forme selon un procédé comprenant
- Compression de la structure dans un moule
- Ramollissement thermique de la structure avec un milieu chauffant,
- Durcissement par refroidissement de la structure avec un liquide de refroidissement,
- Relâchement de la structure (2) du moule.

US 20130020016 A1 décrit la formation d'une bordure, obtenue par compression, formant une zone comprimée et qui sert de zone de fixation pour la fixation de la matelassure à une base de chaise, via des organes de fixation, qui peuvent être des rivets, des vis. US 2007/086612 décrit la fabrication d'une matelassure résultant d'un enchevêtrement 3D de fibres continue et fabriqué dans une installation comprenant une filière d'extrusion ; et des bandes calandreuses, immergées. Des cavités non traversantes sont formées par pressage à chaud pour y recevoir des haut-parleurs

JP 2003 250 667 est relatif au domaine des matelassures de siège et a pour objet, une structure 3D résultant du procédé illustré, à savoir extrusion par une filière d'un rideau de fibres continues chutant par gravité, et repris par un dispositif de calandrage, à bandes. La structure élastique est ensuite coupée en portions, à intervalles réguliers, par exemple un intervalle entre 30cm et 50cm. La matelassure ainsi obtenue peut être comprimée dans un moule. Ce document décrit encore une coiffe qui recouvre la matelassure en étant soit fixée à une base sur laquelle repose la matelassure, ou encore fixée par collage à la matelassure.

### Résumé

La présente divulgation vient améliorer la situation.

Il est proposé un procédé de fabrication d'une matelassure de siège comprenant :
- /A/ Fourniture d'une matelassure comprenant un enchevêtrement 3D de fibres thermoplastiques, continues disposées irrégulièrement (typiquement aléatoirement) formant des boucles soudées entre elles,
- /B/ Pressage à chaud de l'enchevêtrement 3D de fibres en un ou plusieurs zones locales de l'enchevêtrement 3D de sorte à obtenir un ou des zones locales de la matelassure densifiées et rigidifiées, la ou les zones locales étant configurées pour servir de zone de fixation.

L'étape de fourniture /A/ peut comprendre :
- /A1/ Extrusion d'un polymère thermoplastique dans une filière d'extrusion comprenant des buses d'extrusion réparties suivant une direction en longueur et suivant un direction en largeur de la filière d'extrusion, générant un rideau de fibres continues fondues, chutant par gravité,
- /A2/ Réception du rideau de fibres continues fondues chutant par gravité sur un ou des élément support avec une génération d'un enchevêtrement 3D de fibres selon une répartition irrégulière typiquement aléatoire avec fusion de boucles entre les fibres continues
- /A3/ éventuellement solidification de l'enchevêtrement 3D de fibres par immersion dans un liquide de refroidissement.

Selon un mode de réalisation, le pressage à chaud en une ou plusieurs zones locales, de la matelassure entraîne une compression par une réduction partielle de l'épaisseur (EP) de l'enchevêtrement 3D en la zone locale, d'au moins 30% suivant l'épaisseur, voire d'au moins 40%, voire d'au moins 50%, voire d'au moins 60%, voire d'au moins 70%, voire d'au moins 80%, par exemple entre 80% et 95%voire une réduction totale de l'enchevêtrement suivant l'épaisseur

Selon un mode de réalisation objet de la revendication indépendante 1, en /B/ le pressage est une étape de thermoformage au cours de laquelle une première partie de moule et une deuxième partie de moule transforment les fibres de l'enchevêtrement 3D de la zone locale en deux lèvres élastiques, y compris :
- une première lèvre attenante à l'enchevêtrement au niveau de la zone locale par une première extrémité proximale et présente une première extrémité distale libre et
- une deuxième lèvre attenante à l'enchevêtrement au niveau de la zone locale par une deuxième extrémité proximale et présente une deuxième extrémité distale libre,
et dans lequel la première lèvre et la deuxième lèvre sont orientées, l'une vers l'autre, formant une première partie de clipsage configurée pour insertion d'une deuxième partie de clipsage dans une fente délimitée entre les premières et deuxièmes extrémités distales appartenant à la première lèvre et à la deuxième lèvre.

Selon un mode de réalisation objet de la revendication indépendante 6, en /B/ le pressage est une étape de thermoformage au cours de laquelle une première partie de moule et une deuxième partie de moule transforment les fibres de l'enchevêtrement de la zone locale en un élément d'accrochage, tel qu'une barre d'accrochage, ledit élément d'accrochage s'étendant transversalement à la zone locale, en étant attenant à l'enchevêtrement 3D de fibres thermoplastiques par deux extrémités dudit élément d'accrochage.

Selon un mode de réalisation objet de la revendication indépendante 11, en /B/, le pressage génère une fente traversante suivant l'épaisseur, depuis une face de la matelassure, jusqu'à une face opposée.

Selon un mode de réalisation, le procédé présente tout ou partie des caractéristiques suivantes
- les fibres sont des fibres creuses et/ou fibres pleines , de diamètre compris entre 0,2 mm et 2 mm, préférentiellement entre 0,3 mm et 1,5 mm,
- les fibres comprennent un polymère thermoplastique, la composition des fibres comprenant au moins 95% en poids de PET,
et dans lequel l'enchevêtrement 3D de la matelassure (5) présente une masse volumique apparente comprise entre 20kg/m³ et 70 kg/m³ , en particulier entre 45 kg/m³ et 65 kg/m³ en dehors de la ou des zones locales densifiées et rigidifiées.

Selon un second aspect objet des revendications indépendantes objet des revendications indépendantes 4, 9 et 14, la présente divulgation est relative à une matelassure de siège susceptible d'être obtenue selon le procédé selon la présente divulgation comprenant un enchevêtrement 3D de fibres continues thermoplastiques disposées irrégulièrement typiquement aléatoirement, formant des boucles soudées entre elles entre les fibres, et dans lequel :
- les fibres sont des fibres creuses et/ou fibres pleines, en particulier de diamètre compris entre 0,2 mm et 2 mm, préférentiellement entre 0,3 mm et 1,5 mm,
- les fibres comprennent un polymère thermoplastique, la composition des fibres comprenant en particulier au moins 95% en poids de PET,

la matelassure comprenant une ou plusieurs zones locales densifiées et rigidifiées par pressage à chaud de l'enchevêtrement 3D
et dans laquelle l'enchevêtrement 3D de la matelassure (5) présente une masse volumique apparente comprise entre 20 kg/m³ et 70 kg/m³ en particulier entre 45 kg/m³ et 65 kg/m³ en dehors de la ou des zones locales (ZL) densifiées et rigidifiées.

Selon un troisième aspect, la présente divulgation est relative à un siège de véhicule comprenant :
- une matelassure selon la présente divulgation
- une coiffe recouvrant la matelassure et fixée à la matelassure en la ou les zones locales densifiées et rigidifiées.

Selon un mode de réalisation objet de la revendication 5, le siège comporte une matelassure comprenant en la ou les zones locales :
- une première lèvre attenante à l'enchevêtrement au niveau de la zone locale par une première extrémité proximale et présente une première extrémité distale libre et
- une deuxième lèvre attenante à l'enchevêtrement au niveau de la zone locale par une deuxième extrémité proximale et présente une deuxième extrémité distale libre
et dans laquelle la première lèvre et la deuxième lèvre sont orientées, l'une vers l'autre, formant une première partie de clipsage et dans lequel la coiffe est fixé par une deuxième partie de clipsage insérée élastiquement dans une fente délimitée entre la première lèvre et à la deuxième lèvre.

Selon un mode de réalisation objet de la revendication 10, le siège comporte une matelassure, comprenant en la ou les zones locales un ou plusieurs éléments d'accrochage, ledit élément d'accrochage s'étendant transversalement à la zone locale, en étant attenant à l'enchevêtrement 3D par deux extrémités dudit élément d'accrochage et dans lequel la coiffe est fixée par accrochage dudit élément d'accrochage.

Selon un mode de réalisation objet de la revendication 15, le siège présente une matelassure comprenant une fente traversante suivant l'épaisseur, depuis une première face de la matelassure, jusqu'à une deuxième face, opposée, de la matelassure, et dans lequel la coiffe est fixée par insertion d'une plaque de retenue au travers la matelassure depuis la première face jusqu'à la seconde face, ou inversement, puis par pivotement de la plaque de retenue de sorte que la plaque vient s'appuyer sur la seconde face, de part et d'autre d'une embouchure de la fente.

Selon un mode de réalisation objet de la revendication indépendante 16, le siège présente une matelassure comprenant des zones locales pressées à chaud densifiant les fibres de l'enchevêtrement de la zone locale avec conservation des boucles de l'enchevêtrement 3D soudées entre elles en la zone locale et dans lequel la coiffe est fixée par l'intermédiaire d'un organe d'agrippage , comprenant par exemple en ensemble de crochets, et/ou un ou des pointes munie de crochets venant accrocher les boucles de la ou des zones locales densifiées et rigidifiées.

### Brève description des dessins

D'autres caractéristiques, détails et avantages apparaîtront à la lecture de la description détaillée ci-après, et à l'analyse des dessins annexés, sur lesquels :
**Fig. 1**

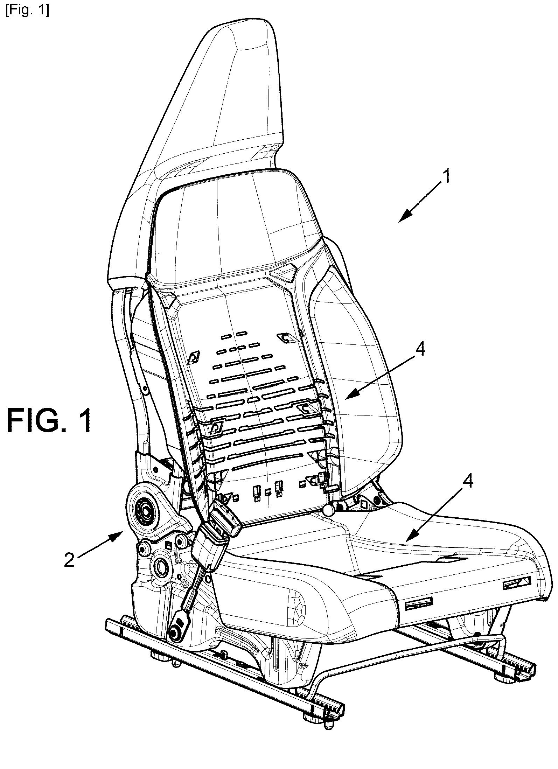

   [Fig. 1] est une vue d'un siège de véhicule automobile, selon un mode de réalisation, illustrant la structure métallique du siège supportant une interface plastique de dossier destinée à recevoir une couche de matelassure de dossier et une interface d'assise, plastique, destinée à recevoir une couche de matelassure d'assise, les matelassures de dossier et d'assise étant non illustrées.
**Fig. 2**

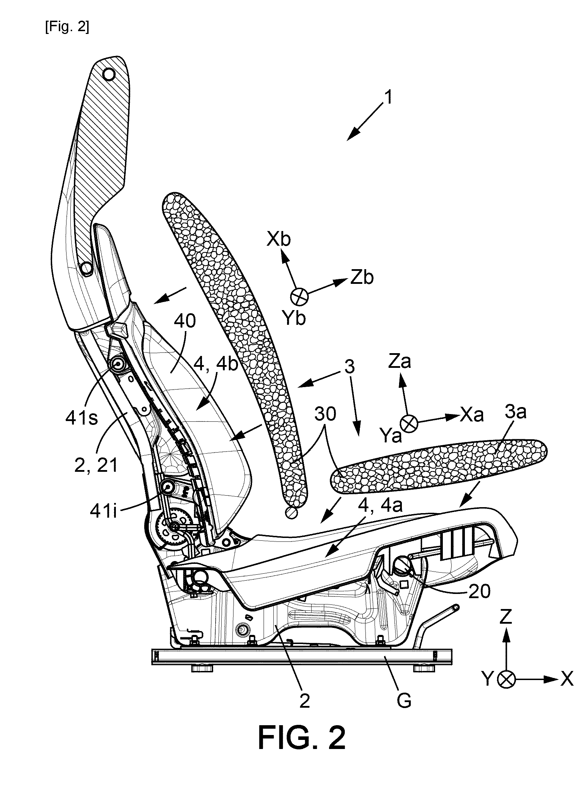

   [Fig. 2] est une vue de coupe du siège de la figure 1, sur lequel on ajoute une couche de matelassure de dossier, et une couche de matelassure d'assise, selon la présente divulgation comprenant un enchevêtrement aléatoire, en trois dimensions (3D) de fibres continues thermoplastiques comprenant des boucles entre fibres thermosoudées, les unes aux autres.
**Fig. 3**

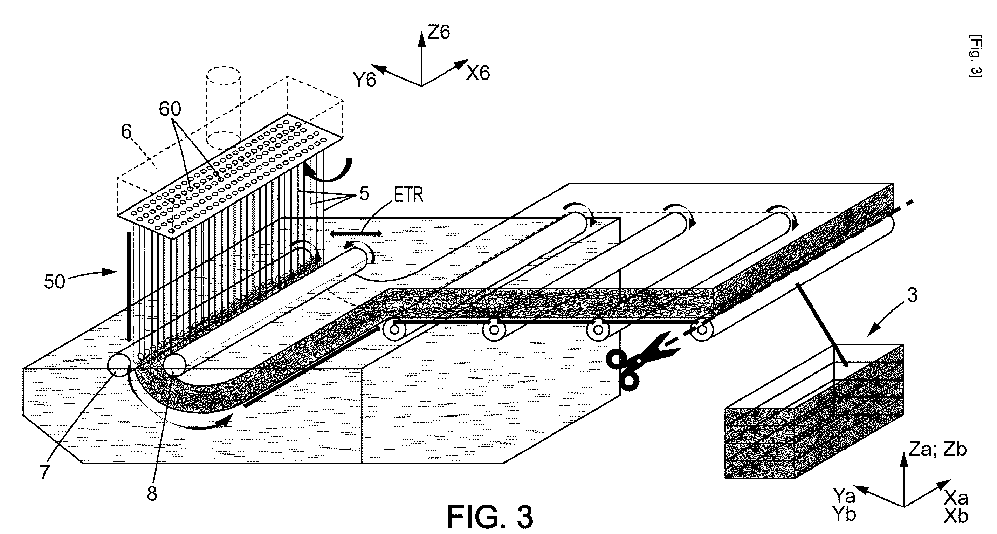

   [Fig. 3] est une vue schématique du procédé de fabrication permettant la fabrication de l'enchevêtrement 3D comprenant une extrusion d'un polymère thermoplastique dans une filière d'extrusion générant un rideau de fibres continues fondues, chutant par gravité, la réception du rideau de fibres continues fondues entre deux organes de guidage contrarotatifs, avec une génération d'un enchevêtrement 3D de fibres et la solidification de l'enchevêtrement 3D de fibres par immersion dans un liquide de refroidissement, puis l'obtention de matelassure par des découpes transversales au sens de défilement.
**Fig. 4**

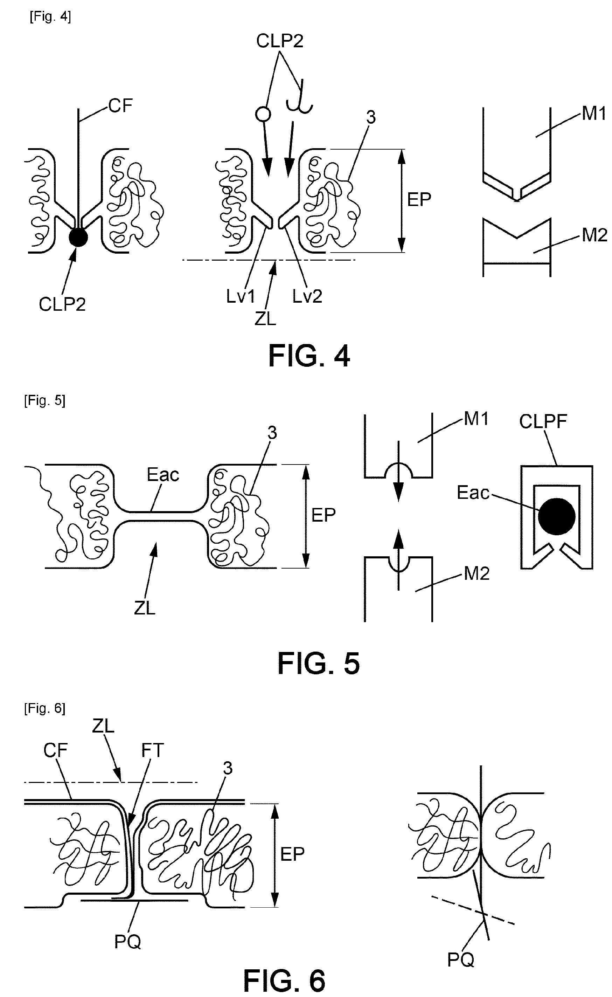

   [Fig. 4] est une vue d'une zone locale de la matelassure avec réduction de l'épaisseur et transformation des fibres de l'enchevêtrement 3D en une première lèvre et une deuxième lèvre formant une première partie de clipsage, les lèvres obtenues par pressage à chaud par le travail d'un premier et d"un deuxième moule, de part et d'autre de la matelassure, la première partie de clipsage autorisant le clipsage élastique d'une deuxième partie élastique entre les deux lèvres de la première partie de clipsage
**Fig. 5**
   [Fig. 5] une vue d'une zone locale de la matelassure avec réduction de l'épaisseur et transformation des fibres de l'enchevêtrement 3D en un élément d'accrochage, sous forme d'une barre d'accrochage obtenue par pressage à chaud par le travail d'un premier et d'un deuxième moule, de part et d'autre de la matelassure.
**Fig. 6**
   [Fig. 6] est une vue d'une zone locale de la matelassure présentant une fente traversante depuis une première face de la matelassure jusqu'à une deuxième face opposée, autorisant la fixation d'une coiffe par une plaque de retenue solidaire de la coiffe qui est insérée dans le sens de la fente sensiblement parallèlement à la fente, puis pivotée pour prendre appui sur la deuxième face opposée de la matelassure.
**Fig. 7**

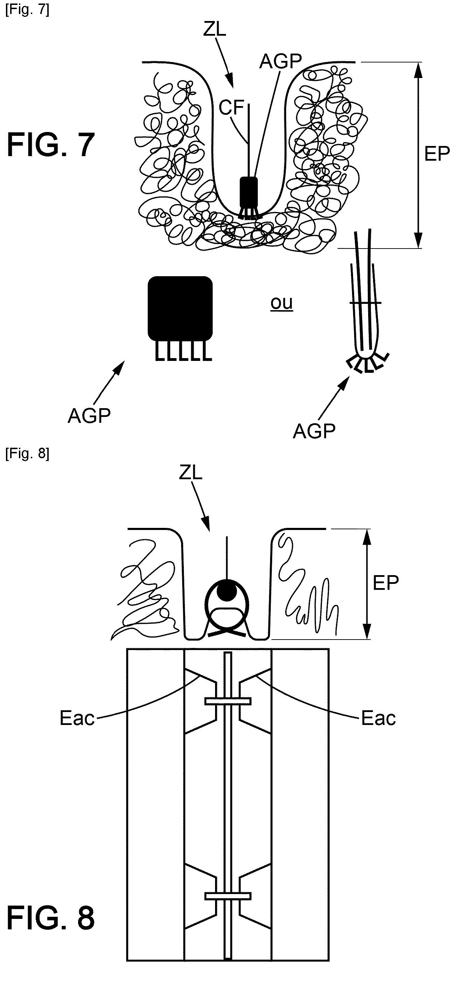

   [Fig. 7] est une vue d'une zone locale avec réduction de l'épaisseur de la matelassure et conservation des boucles de l'enchevêtrement 3D soudées entre elles en la zone locale pour permettre l'accrochage d'élément(s) d'agrippage comportant des crochets venant agripper les boucles.
**Fig. 8**
   [Fig. 8] est une variante de la figure 5 avec transformation des fibres de l'enchevêtrement 3D en plusieurs éléments d'accrochage, obtenue par pressage à chaud par le travail d'un premier et d'un deuxième moule de part et d'autre de la matelassure
**Fig. 9**

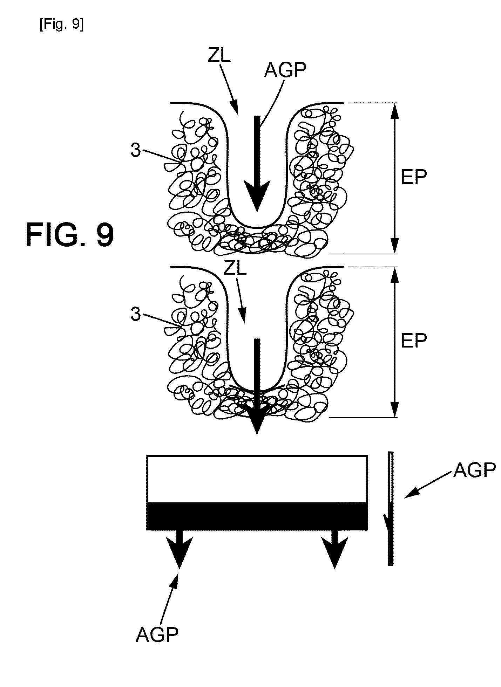

   [Fig. 9] est une variante de la figure 7 pour lequel l'élément d'agrippage comporte une pointe munie de crochets, éventuellement déployables par rapport à la pointe.
**Fig 10**

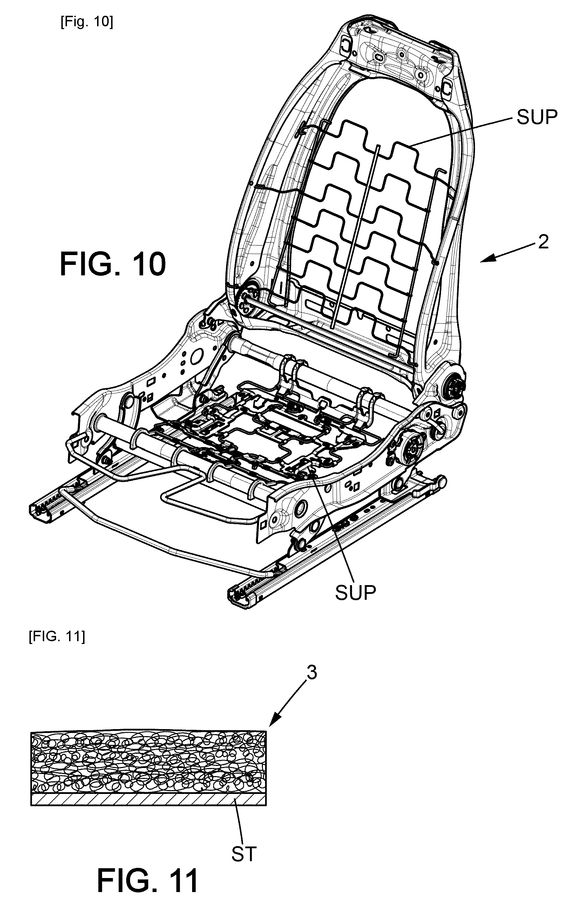

   [Fig. 10] est une vue d'un siège selon un autre mode de réalisation comprenant une suspension associée à la structure d'assise et une suspension associée à la structure de dossier.
**Fig 11**
   [Fig. 11] est une vue d'un ensemble comprenant une matelassure et un support associé à la matelassure.

### Description des modes de réalisation

Aussi, la présente divulgation est relative à un siège 1 comprenant :
- une structure 2 typiquement métallique,
- une matelassure 3.
- éventuellement une interface 4 située entre la structure 2 et la matelassure 3 et notamment comme illustrée selon le mode de réalisation des figures 1 et 2.

Le siège comporte encore un coiffe CF (non illustrée à la figure 1) venant recouvrir la matelassure, en étant typiquement fixée à la matelassure.

A la figure 2, un repère XYZ est illustré, la direction X orientée suivant la direction de coulissement de glissière G entre la structure 2 de siège et un plancher du véhicule, la direction Y, orientée suivant une direction transversale du siège, et la direction Z selon la verticale.

La structure 2 typiquement en métal comprend un châssis d'assise 20 et une châssis de dossier 21, typiquement articulé autour d'un axe de rotation transversal, typiquement au moyen d'articulations du type continue.

Le châssis d'assise 20 comprend typiquement :
- deux flasques latéraux, s'étendant depuis un bord arrière de l'assise et jusqu'à un bord avant, suivant la direction X, ou légèrement incliné par rapport à la direction longitudinale X (typiquement de plus ou moins 30 degrés) autour d'un axe transversal et,
- une pièce frontale, reliant deux extrémités avant des flasques, et s'étendant suivant la direction transversale. La pièce frontale et les flasques sont typiquement des tôles conformées, par exemple, par les techniques d'emboutissage.

Le châssis de dossier comprend typiquement des montants latéraux, s'étendant en hauteur, ainsi qu'une traverse supérieure reliant deux extrémités supérieures des montants. Les montants et la traverse supérieure sont typiquement des tôles conformées, par exemple par les techniques d'emboutissage.

La matelassure 3 comprend typiquement une couche matelassure de d'assise 3a qui confère le confort de l'assise et qui est reçue sur une interface 4a d'assise intercalée entre le châssis d'assise 20 et la couche de matelassure d'assise 3a et/ou la matelassure 3 comprend typiquement une couche matelassure de dossier 3b qui confère le confort du dossier et qui est reçue sur une interface 4b de dossier qui est intercalée entre le châssis de dossier 21 et la couche de matelassure de dossier 3b.

La matelassure 3, en particulier la couche de matelassure d'assise 3a et/ou la couche de matelassure de dossier 3b comprend un enchevêtrement en trois dimension (en « 3D ») de fibres 5 continues, thermoplastiques, disposées aléatoirement, formant des boucles soudées entre elles entre les fibres 5.

Les fibres peuvent être des fibres creuses 5a et/ou fibres pleines 5b. Les fibres peuvent être de diamètre compris entre 0,2 mm et 2 mm, préférentiellement entre 0,3 mm et 1,5 mm. On entend par « continues » dans « fibres continues » le fait que les fibres sont de longueur très supérieure au diamètre des fibres, et du fait du procédé qui est décrit ci-après, typiquement au moins d'un rapport 100, voire 500, voire 1000. Bien souvent, et notamment comme compréhensible du procédé de fabrication, les fibres s'étendent typiquement depuis une première extrémité sur un premier bord de l'enchevêtrement 3D et jusqu'à une deuxième extrémité sur un deuxième bord de l'enchevêtrement AD, opposé au premier bord.

Les fibres 5 comprennent un polymère thermoplastique, la composition des fibres comprenant de préférence au moins 95% en poids de PET. Par exemple la composition des fibres, voire de la matelassure comprend :
- 95% à 99% en poids d'un premier polymère de la famille des polyesters tel que le PET (Polytéréphtalate d'éthylène),
- 1% à 5% en poids d'un second polymère de la famille des polyesters tel que le PTT (Polytéréphtalate de triméthylène )ou PBT (Polybutylène téréphtalate). La somme du PET et du PTT (ou PBT) peut faire 100% en poids des fibres, voire de la matelassure L'enchevêtrement 3D de la matelassure 5 peut présenter une masse volumique apparente comprise entre 20 kg/m³ et 70 kg/m³, voire entre 45 kg/m³ et 65 kg/m³.

De préférence, les vides entre les fibres 5 de l'enchevêtrement 3D de fibres 5 de la matelassure 3 sont laissés libres. On obtient une matelassure très respirante, en raison des nombreux inter-espaces entre les fibres qui favorisent la circulation d'air.

La couche de matelassure d'assise 3a, s'étend longueur suivant une direction longitudinale Xa de l'assise d'un bord arrière jusqu'à un bord avant de l'assise, et en largeur suivant une direction transversale a de l'assise d'un premier bord latéral jusqu'à un second bord latéral, ainsi qu'en épaisseur suivant une direction orthogonale Za, qui est orthogonale à la direction longitudinale et à la direction transversale de l'assise. L'épaisseur de la couche de matelassure d'assise peut être comprise entre 60mm à 100mm.

La couche de matelassure de dossier 3b s'étend en longueur suivant une direction longitudinale Xb du dossier d'un bord inférieur vers un bord supérieur du dossier, et en largeur suivant une direction transversale Yb du dossier d'un premier bord latéral jusqu'à un second bord latéral, ainsi qu'en épaisseur suivant une direction orthogonale Zb qui est orthogonale à la direction longitudinale et à la direction transversale du dossier. L'épaisseur de la couche de matelassure de dossier peut être comprise 15 mm à 50 mm.

L'interface 4, en particulier l'interface d'assise 4a ou l'interface de dossier 4b peut comprendre un matériau entièrement ou partiellement en plastique. Par exemple, ladite interface 4 est en ABS (acrylonitrile butadiène styrène) et/ou PC (Polycarbonate) et/ou P/E (Copolymère Polypropylène/Polyéthylène).

De manière générale, l'interface 4, en particulier en particulier l'interface d'assise 4a ou l'interface de dossier 4b peut comprendre une coque. La coque peut être une pièce moulée ou une pièce thermoformée.

En particulier ladite interface de dossier 4b peut comprendre :
- au moins une coque déformable 40 de dossier, recevant la matelassure qui est une matelassure de dossier 3b, ladite coque déformable 40 étant configurée pour prendre différentes formes notamment depuis une position initiale de lordose lombaire et en particulier jusqu'à une position finale de cyphose lombaire, en réponse à une charge variable appliqué par le dos de l'occupant du siège,
- un système couplant ladite coque déformable 40 de dossier à la structure comprenant des liens 41s supérieurs de contrôle de déplacement, et des liens 41i inférieurs de contrôle de déplacement.

Les liens 41s supérieurs de contrôle de déplacement et/ou les liens 41i inférieures de contrôle de déplacement sont typiquement des liens articulés qui peuvent comprendre des bielles.

Selon un autre mode de réalisation la matelassure 8, en particulier d'assise et de dossier peut être associée à une structure de siège, qui comprend une suspension SUP typiquement métallique, en particulier, telle qu'illustrée à la figure 10 :
- une suspension SUP typiquement métallique reliant une entretoise avant et une entretoise arrière d'une structure d'assise, les entretoises reliant un flasque droit et un flasque gauche de la structure d'assise,
- une suspension SUP typiquement métallique reliant un montant droite et un montant gauche d'une structure de dossier.

Encore, selon un autre mode de réalisation, la matelassure 3 peut être associée à un support ST, typiquement préassemblé à la matelassure, et qui autorise notamment un assemblage à une structure de siège, en particulier dépourvue d'interface ou de suspension.

La présente divulgation est encore relative à un procédé de fabrication d'une matelassure de siège selon la présente divulgation: comprenant:
- /A/ Fourniture d'une matelassure 3 comprenant un enchevêtrement 3D de fibres thermoplastiques 5, continues disposées irrégulièrement typiquement aléatoirement formant des boucles soudées entre elles,
- /B/ Pressage à chaud de l'enchevêtrement 3D de fibres en un ou plusieurs zones locales de l'enchevêtrement 3D de sorte à obtenir une ou des zones locales ZL de la matelassure densifiées et rigidifiées. La ou les zones locales densifiées et rigidifiées sont configurées pour servir de zone de fixation, avantageusement sans risque d'arrachement des boucles de l'enchevêtrement et par comparaison aux zones non densifiées et rigidifiées.

L'étape de fourniture /A/ peut comprendre, notamment tel qu'illustré schématique à la figure 3 :
- /A1/ Extrusion d'un polymère thermoplastique dans une filière d'extrusion 6 comprenant des buses d'extrusion 60 réparties suivant une direction en longueur X6 et suivant un direction en largeur Y6 de la filière d'extrusion, générant un rideau de fibres continues fondues 50, chutant par gravité,
- /A2/ Réception du rideau de fibres continues fondues chutant par gravité sur un ou des organes supports, en particulier entre deux organes de guidage 7, 8 contrarotatifs, avec une génération d'un enchevêtrement 3D de fibres 5 selon une répartition irrégulière typiquement aléatoire avec fusion des boucles entre les fibres continue, en particulier selon une couche d'épaisseur déterminée par l'entraxe ETR entre les deux organes contrarotatifs 7, 8
- /A3/ Solidification de l'enchevêtrement 3D de fibres par immersion dans un liquide de refroidissement, tel que de l'eau.

Les buses d'extrusion 60 sont de préférence réparties régulièrement suivant la direction en longueur X6 de la filière d'extrusion, ainsi qu'en largeur suivant la direction en largeur Y6.

L'épaisseur de la couche de matelassure formée par l'enchevêtrement peut être réglée, par un réglage de l'entraxe entre les deux organes de guidage 7,8.

En /A2/, les deux organes de guidage 7, 8 sont entrainés en rotation à une vitesse, typiquement inférieure la vitesse de chute des fibres, assurant une accumulation des fibres à l'origine de la formation de boucles qui se thermosoudent entre fibres, générant l'enchevêtrement irrégulier, aléatoire, en trois dimensions. La solidification en /A/ est obtenue juste après l'étape /B/, les deux organes de guidage pouvant être immergés à mi-hauteur, à cet effet.

La température de l'extrusion mise en œuvre en /A/ dans la filière d'extrusion est typiquement comprise entre 180°Cet 240°C. La filière d'extrusion est alimentée en granulés de polymère thermoplastique.

La couche d'enchevêtrement 3D de fibres, en défilement continu, est ensuite guidée, en dehors du réservoir de liquide de refroidissement pour être séchée, typiquement par des secousses/vibrations. La couche en défilement est ensuite découpée, par des coupes transversales, permettant l'obtention de différentes matelassures 3, et comme visibles à la figure 3. Ces matelassures 3 s'étendent en longueur, par exemple en longueur suivant la direction longitudinale Xa de la couche de matelassure d'assise (ou en longueur suivant la direction longitudinale Xb de la couche de matelassure de dossier), typiquement suivant la direction transversale au défilement de la couche.

Selon un mode de réalisation, la masse volumique apparente peut être homogène suivant la longueur et la largeur de la couche, et comme illustré à la figure 5, en haut. La densité du nombre de buses d'extrusion est ainsi homogène suivant la direction en longueur de la filière d'extrusion.

Selon les constations de l'inventeur, la matelassure obtenue à l'issue du procédé illustré à la figure 3 génère une matelassure avec un enchevêtrement 3D de la matelassure 5 présente une masse volumique apparente comprise entre 20kg/m³ et 70 kg/m³, en particulier entre 45 kg/m³ et 65 kg/m³ , et de manière sensiblement homogène. Une telle densité de matelassure est optimisée pour assurer un confort et un soutien de l'occupant.

Selon la Demanderesse, une telle matelassure présentant toutefois certaines limitations : en particulier, il n'est pas possible de s'agripper sur les boucles de l'enchevêtrement 3D de la matelassure par exemple pour y fixer une coiffe en raison de la faible résistance à l'arrachement des fibres thermoplastique de l'enchevêtrement 3D.

Alternativement au procédé continu illustré à la figure 3, une variante peut être mise en œuvre et dans lequel on obtient la matelassure comprenant un enchevêtrement 3D de fibres thermoplastiques, continues disposées aléatoirement formant des boucles soudées entre elles par :
- /A1/ Extrusion d'un polymère thermoplastique dans une filière d'extrusion comprenant des buses d'extrusion réparties suivant une direction en longueur et suivant un direction en largeur de la filière d'extrusion, générant un rideau de fibres continues fondues, chutant par gravité,
- /A2/ Réception du rideau de fibres continues fondues chutant par gravité dans une cavité de moulage d'un outillage de moulage de sorte à générer un enchevêtrement 3D de fibres selon une répartition irrégulière, aléatoire, avec fusion de boucles entre les fibres continues
- /A3/ Solidification de l'enchevêtrement 3D de fibres conformé à la cavité de moulage par immersion dans un liquide de refroidissement.

Selon un mode de réalisation, les buses sont pilotables, configurées de sorte à pouvoir changer la forme du rideau de fibres, et dans lequel on fournit une unité logique de traitement qui comprend un module de commande comprenant un microprocesseur et une mémoire comprenant des instructions pour, en /A/, piloter les buses de sorte à générer un rideau de fibres fondues, de forme variable au cours du l'extrusion suivant la direction en longueur et/ou la direction en largeur de la filière extrusion .

L'étape /B/ de pressage à chaud de l'enchevêtrement 3D de fibres en un ou plusieurs zones locales de l'enchevêtrement 3D permet d'obtenir une ou des zones locales ZL de la matelassure densifiées et rigidifiées, qui permettent de remédier à ce problème, en évitant de tels risques d'arrachement.

Les figures 4 à 9 illustrent divers modes de réalisation permettant l'obtention des zones locales ZL, densifiées et rigidifiées, et qui peuvent servir de zones de fixation, avantageusement sans risque d'arrachement des fibres thermoplastique de l'enchevêtrement.

De manière générale, le pressage à chaud en une ou plusieurs zones locales, de la matelassure peut entraîner une compression par une réduction partielle de l'épaisseur de l'enchevêtrement 3D en la zone locale, d'au moins 30% suivant l'épaisseur de la matelassure, voire d'au moins 40%, voire d'au moins 50%, voire d'au moins 60%, voire d'au moins 70%, voire d'au moins 80% typiquement comprise entre 80% et 95%. Une telle réduction partielle est illustrée par exemple aux figures 7 et 9. Le pressage à chaud est typiquement obtenu par le travail en pression d'un premier moule M1 et d'un deuxième moule M2.

Le pressage à chaud peut être obtenu en portant l'enchevêtrement 3D, au moins au niveau de la ou les zones locales à une température comprise entre 160°C et 190°C.

Le pressage peut encore entraîner une réduction totale de l'enchevêtrement suivant l'épaisseur, et comme illustré aux figures 4, 5 ou 6 ou encore 7. Une telle réduction totale suivant l'épaisseur peuvent entrainer un déplacement des fibres dans le plan à savoir selon XY.

Selon un mode de réalisation illustré à titre indicatif à la figure 4, en /B/ le pressage peut être une étape de thermoformage au cours de laquelle une première partie de moule M1 et une deuxième partie de moule M2 transforment les fibres de l'enchevêtrement 3D de la zone locale en deux lèvres élastique, y compris :
- une première lèvre Lv1 attenante à l'enchevêtrement au niveau de la zone locale par une première extrémité proximale et présente une première extrémité distale libre et
- une deuxième lèvre Lv2 attenante à l'enchevêtrement au niveau de la zone locale par une deuxième extrémité proximale et présente une deuxième extrémité distale libre.

La première lèvre Lv1 et la deuxième lèvre Lv2 sont orientées, l'une vers l'autre, formant une première partie de clipsage configurée pour insertion d'une deuxième partie de clipsage CLP2 dans une fente délimitée entre les premières et deuxièmes extrémités distales appartenant à la première lèvre Lv1 et à la deuxième lèvre Lv2 de la première partie de clipsage.

Une coiffe CF peut comprendre une ou une pluralité de deuxièmes parties de clipsage CLP2 configurée(s) pour venir se ficher dans des zones locales entre les deux lèvres Lv1 Lv2 de la première partie de clipsage.

Selon un mode de réalisation illustré titre indicatif à la figure 5, ou encore à la figure 8, le pressage est une étape de thermoformage au cours de laquelle une première partie de moule M1 et une deuxième partie de moule M2 transforment les fibres de l'enchevêtrement 3D de la zone locale en un élément d'accrochage Eac, tel qu'une barre d'accrochage, ledit élément d'accrochage s'étendant transversalement à la zone locale, en étant attenant à l'enchevêtrement 3D par deux extrémités dudit élément d'accrochage Eac.

Une coiffe CF peut comprendre un clipse femelle CLPF à l'intérieur duquel vient s'emboîter élastiquement ledit élément d'accrochage Eac.

Selon un mode de réalisation illustré à titre indicatif à la figure 6, en /B/, le pressage génère une fente traversante FT suivant l'épaisseur de la matelassure, depuis une première face de la matelassure, jusqu'à une deuxième face opposée La coiffe peut être fixée par insertion d'une plaque de retenue PQ au travers de la fente de la matelassure depuis la première face jusqu'à la seconde face (on inversement). La plaque est insérée au travers de la fente traversante FT en orientant la plaque de retenue parallèlement à la fente traversante FT.

Une fois la plaque de retenue PQ a traversé la matelassure, le blocage peut être obtenu par un pivotement de la plaque de retenue PQ sensiblement à 90°, alors sensiblement perpendiculaire à la fente, de sorte que la plaque de retenue vient s'appuyer sur la seconde face (ou la première face) de part et d'autre d'une embouchure de la fente.

Selon un mode de réalisation illustré à titre indicatif à la figure 7 ou 9, en /B/ le pressage est une étape de thermoformage au réduisant partiellement l'épaisseur de l'enchevêtrement 3D en densifiant les fibres de l'enchevêtrement de la zone locale avec conservation des boucles de l'enchevêtrement 3D soudées entre elles en la zone locale ZL.

La coiffe peut être fixée par l'intermédiaire d'un organe d'agrippage AGP, comprenant par exemple en ensemble de crochets (figure 7), et/ou des pointes munie de crochets (figure 9) venant accrocher les boucles de la zone locale densifiée. Les organes d'agrippage peuvent s'agripper aux boucles de l'enchevêtrement, sans risque d'arrachement, en raison de la densification obtenue par le pressage à chaud.

La présente divulgation est encore relative à une matelassure de siège susceptible d'être obtenue selon le procédé de la présente divulgation comprenant un enchevêtrement 3D de fibres continues thermoplastiques disposées irrégulièrement typiquement aléatoirement, formant des boucles soudées entre elles entre les fibres, et dans lequel :
- les fibres 5 sont des fibres creuses et/ou fibres pleines , en particulier de diamètre compris entre 0,2 mm et 2 mm, préférentiellement entre 0,3 mm et 1,5 mm,
- les fibres 5 comprennent un polymère thermoplastique, la composition des fibres comprenant en particulier au moins 95% en poids de PET.

Selon la présente divulgation, la matelassure comprenant une ou plusieurs zones locales densifiées et rigidifiées par pressage à chaud de l'enchevêtrement 3D.

L'enchevêtrement 3D de la matelassure 3 peut présenter une masse volumique apparente comprise entre 20 kg/m³ et 70 kg/m³ en particulier entre 45 kg/m³ et 65 kg/m³ à l'exception des zones locales qui peuvent présenter une masse volumique supérieure.

La présente divulgation est encore relative à un siège de véhicule comprenant :
- une matelassure 3 selon la présente divulgation
- une coiffe CF recouvrant la matelassure et fixée à la matelassure en la ou les zones locales ZL densifiées et rigidifiées.

Selon un mode de réalisation, la matelassure 3 peut comprendre en la ou les zones locales :
- une première lèvre Lv1 attenante à l'enchevêtrement au niveau de la zone locale ZL par une première extrémité proximale et présente une première extrémité distale libre et
- une deuxième lèvre Lv2 attenante à l'enchevêtrement au niveau de la zone locale ZL par une deuxième extrémité proximale et présente une deuxième extrémité distale libre.

La première lèvre Lv1 et la deuxième lèvre Lv2 sont orientées, l'une vers l'autre, formant une première partie de clipsage et la coiffe est fixée par une deuxième partie de clipsage CLP2 insérée élastiquement dans une fente délimitée entre la première lèvre et à la deuxième lèvre, et selon la figure 4.

Selon un mode de réalisation, la matelassure 3 peut comprendre en la ou les zones locales un ou plusieurs éléments d'accrochage Eac, ledit élément d'accrochage Eac s'étendant transversalement à la zone locale, en étant attenant à l'enchevêtrement 3D par deux extrémités dudit élément d'accrochage et dans lequel la coiffe est fixée par accrochage dudit élément d'accrochage Eac, par exemple par utilisation d'un clipse femelle CLPF et selon les figures 4 ou 8.

Selon un mode de réalisation, la matelassure 3 peut comprendre une fente traversante FT suivant l'épaisseur, depuis une première face de la matelassure, jusqu'à une deuxième face, opposée, de la matelassure. La coiffe est fixée par insertion d'une plaque de retenue PQ au travers la matelassure depuis la première face jusqu'à la seconde face, ou inversement, puis par pivotement de la plaque de retenue PQ de sorte que la plaque vient s'appuyer sur la seconde face (ou la première face), de part et d'autre d'une embouchure de la fente traversante FT, et comme illustrée à la figure 6.

La matelassure peut comprendre des zones locales pressées à chaud densifiant les fibres de l'enchevêtrement de la zone locale avec conservation des boucles de l'enchevêtrement 3D soudées entre elles en la zone locale. La coiffe CF peut être fixée par l'intermédiaire d'un organe d'agrippage AGP, comprenant par exemple en ensemble de crochets, et/ou une pointe munie de crochet(s) venant accrocher les boucles de la zone locale densifiée, et comme illustré à la figure 7 ou 9. Le ou les crochets associé(s) à la pointe peuvent être déployable pour favoriser l'accrochage, une fois la pointe insérée dans les boucles de l'enchevêtrement 3D.

### Liste des signes de référence

- 1 : Siège,
- 2 : Structure,
- 3 : Matelassure,
- 3a : Couche de matelassure d'assise,
- Xa, Ya, Za : Directions en longueur, en largeur et en épaisseur de la couche de matelassure d'assise,
- 3b : Couche de matelassure de dossier,
- Xb, Yb, Zb : Directions en longueur, en largeur et en épaisseur de la couche de matelassure de dossier,
- 4 : Interface,
- 41s, 41i. Liens supérieurs et inférieures de contrôle de déplacement,
- 5 : Fibres,
- 6 Filière d'extrusion,
- 60 Buses d'extrusion,
- 7, 8. Organes de guidage contrarotatifs,
- EP. Epaisseur,
- ZL. Zones locales,
- Eac. Elément d'accrochage,
- AGP. Organe d'agrippage.

.

## Revendications

1. Procédé de fabrication d'une matelassure (3) de siège de véhicule comprenant :
- /A/ Fourniture d'une matelassure (3) comprenant un enchevêtrement 3D de fibres thermoplastiques (5), continues disposées aléatoirement formant des boucles soudées entre elles,
- /B/ Pressage à chaud de l'enchevêtrement 3D de fibres en un ou plusieurs zones locales de l'enchevêtrement 3D de sorte à obtenir un ou des zones locales (ZL) de la matelassure densifiées et rigidifiées, la ou les zones locales étant configurées pour servir de zone de fixation et dans lequel en /B/ le pressage est une étape de thermoformage au cours de laquelle une première partie de moule (M1) et une deuxième partie de moule (M2) transforment les fibres de l'enchevêtrement 3D de la zone locale en deux lèvres élastiques, y compris :
- une première lèvre (Lv1) attenante à l'enchevêtrement au niveau de la zone locale par une première extrémité proximale et présente une première extrémité distale libre et
- une deuxième lèvre (Lv2) attenante à l'enchevêtrement au niveau de la zone locale par une deuxième extrémité proximale et présente une deuxième extrémité distale libre,
et dans lequel la première lèvre (Lv1) et la deuxième lèvre (Lv2) sont orientées, l'une vers l'autre, formant une première partie de clipsage configurée pour insertion d'une deuxième partie de clipsage dans une fente délimitée entre les premières et deuxièmes extrémités distales appartenant à la première lèvre et à la deuxième lèvre.

2. Procédé de fabrication d'une matelassure selon la revendication 1 dans lequel l'étape de fourniture /A/ comprend :
- /A1/ Extrusion d'un polymère thermoplastique dans une filière d'extrusion (6) comprenant des buses d'extrusion (60) réparties suivant une direction en longueur (X6) et suivant un direction en largeur (Y6) de la filière d'extrusion, générant un rideau de fibres continues fondues, chutant par gravité,
- /A2/ Réception du rideau de fibres continues fondues chutant par gravité sur un ou des élément support (7, 8) avec une génération d'un enchevêtrement 3D de fibres selon une répartition irrégulière avec fusion de boucles entre les fibres continues
- /A3/ éventuellement solidification de l'enchevêtrement 3D de fibres par immersion dans un liquide de refroidissement.

3. Procédé selon la revendication 1 ou 2, dans lequel le pressage à chaud en une ou plusieurs zones locales, de la matelassure entraîne une compression par une réduction partielle de l'épaisseur (EP) de l'enchevêtrement 3D en la zone locale, d'au moins 30% suivant l'épaisseur, voire d'au moins 40%, voire d'au moins 50%, voire d'au moins 60%, voire d'au moins 70%, voire d'au moins 80%, voire une réduction totale de l'enchevêtrement suivant l'épaisseur.

4. Matelassure de siège de véhicule susceptible d'être obtenue selon le procédé de l'une des revendications 1 à 3 comprenant un enchevêtrement 3D de fibres (5) continues thermoplastiques disposées irrégulièrement, formant des boucles soudées entre elles entre les fibres, et dans lequel :
- les fibres sont des fibres creuses et/ou fibres pleines, en particulier de diamètre compris entre 0,2 mm et 2 mm, préférentiellement entre 0,3 mm et 1,5 mm,
- les fibres (5) comprennent un polymère thermoplastique, la composition des fibres comprenant en particulier au moins 95% en poids de PET,
la matelassure comprenant une ou plusieurs zones locales densifiées et rigidifiées par pressage à chaud de l'enchevêtrement 3D
et dans laquelle l'enchevêtrement 3D de la matelassure (5) présente une masse volumique apparente comprise entre 20 kg/m³ et 70 kg/m³ en particulier entre 45 kg/m³ et 65 kg/m³ en dehors de la ou des zones locales (ZL) densifiées et rigidifiées
et dans laquelle la matelassure comprend, en la ou les zones locales :
- une première lèvre (Lv1) attenante à l'enchevêtrement au niveau de la zone locale (ZL) par une première extrémité proximale et présente une première extrémité distale libre et
- une deuxième lèvre (Lv2) attenante à l'enchevêtrement au niveau de la zone locale (ZL) par une deuxième extrémité proximale et présente une deuxième extrémité distale libre et dans laquelle la première lèvre (Lv1) et la deuxième lèvre (Lv2) sont orientées, l'une vers l'autre, formant une première partie de clipsage.

5. Siège de véhicule comprenant :
- une matelassure (3) selon la revendication 4
- une coiffe (CF) recouvrant la matelassure et fixée à la matelassure en la ou les zones locales densifiées et rigidifiées,
et dans lequel la coiffe est fixée par une deuxième partie de clipsage (CLP2) insérée élastiquement dans une fente délimitée entre la première lèvre (Lv1) et à la deuxième lèvre (Lv2).

6. Procédé de fabrication d'une matelassure (3) de siège de véhicule comprenant :
- /A/ Fourniture d'une matelassure (3) comprenant un enchevêtrement 3D de fibres thermoplastiques (5), continues disposées aléatoirement formant des boucles soudées entre elles,
- /B/ Pressage à chaud de l'enchevêtrement 3D de fibres en un ou plusieurs zones locales de l'enchevêtrement 3D de sorte à obtenir un ou des zones locales (ZL) de la matelassure densifiées et rigidifiées, la ou les zones locales étant configurées pour servir de zone de fixation,
et dans lequel en /B/ le pressage est une étape de thermoformage au cours de laquelle une première partie de moule (M1) et une deuxième partie de moule (M2) transforment les fibres de l'enchevêtrement de la zone locale en un élément d'accrochage (Eac), qui est une barre d'accrochage, ledit élément d'accrochage s'étendant transversalement à la zone locale, en étant attenant à l'enchevêtrement 3D de fibres thermoplastiques par deux extrémités dudit élément d'accrochage (Eac).

7. Procédé selon la revendication 6 dans lequel l'étape de fourniture /A/ comprend :
- /A1/ Extrusion d'un polymère thermoplastique dans une filière d'extrusion (6) comprenant des buses d'extrusion (60) réparties suivant une direction en longueur (X6) et suivant un direction en largeur (Y6) de la filière d'extrusion, générant un rideau de fibres continues fondues, chutant par gravité,
- /A2/ Réception du rideau de fibres continues fondues chutant par gravité sur un ou des élément support (7, 8) avec une génération d'un enchevêtrement 3D de fibres selon une répartition irrégulière avec fusion de boucles entre les fibres continues
- /A3/ éventuellement solidification de l'enchevêtrement 3D de fibres par immersion dans un liquide de refroidissement.

8. Procédé selon la revendication 6 ou 7, dans lequel le pressage à chaud en une ou plusieurs zones locales, de la matelassure entraîne une compression par une réduction partielle de l'épaisseur (EP) de l'enchevêtrement 3D en la zone locale, d'au moins 30% suivant l'épaisseur, voire d'au moins 40%, voire d'au moins 50%, voire d'au moins 60%, voire d'au moins 70%, voire d'au moins 80%, voire une réduction totale de l'enchevêtrement suivant l'épaisseur.

9. Matelassure de siège de véhicule susceptible d'être obtenue selon le procédé de l'une des revendications 6 à 8 comprenant un enchevêtrement 3D de fibres (5) continues thermoplastiques disposées irrégulièrement, formant des boucles soudées entre elles entre les fibres, et dans lequel :
- les fibres sont des fibres creuses et/ou fibres pleines, en particulier de diamètre compris entre 0,2 mm et 2 mm, préférentiellement entre 0,3 mm et 1,5 mm,
- les fibres (5) comprennent un polymère thermoplastique, la composition des fibres comprenant en particulier au moins 95% en poids de PET,
la matelassure comprenant une ou plusieurs zones locales densifiées et rigidifiées par pressage à chaud de l'enchevêtrement 3D
et dans laquelle l'enchevêtrement 3D de la matelassure (5) présente une masse volumique apparente comprise entre 20 kg/m³ et 70 kg/m³ en particulier entre 45 kg/m³ et 65 kg/m³ en dehors de la ou des zones locales (ZL) densifiées et rigidifiées
et dans laquelle la matelassure comprend en la ou les zones locales un élément d'accrochage (Eac), qui est une barre d'accrochage, s'étendant transversalement à la zone locale, en étant attenant à l'enchevêtrement 3D de fibres thermoplastiques par deux extrémités de ladite barre d'accrochage.

10. Siège de véhicule comprenant :
- une matelassure (3) selon la revendication 9
- une coiffe (CF) recouvrant la matelassure et fixée à la matelassure en la ou les zones locales densifiées et rigidifiées
et dans lequel la coiffe (CF) est fixée par accrochage dudit élément d'accrochage (Eac).

11. Procédé de fabrication d'une matelassure (3) de siège de véhicule comprenant :
- /A/ Fourniture d'une matelassure (3) comprenant un enchevêtrement 3D de fibres thermoplastiques (5), continues disposées aléatoirement formant des boucles soudées entre elles,
- /B/ Pressage à chaud de l'enchevêtrement 3D de fibres en un ou plusieurs zones locales de l'enchevêtrement 3D de sorte à obtenir un ou des zones locales (ZL) de la matelassure densifiées et rigidifiées, la ou les zones locales étant configurées pour servir de zone de fixation,
et dans lequel en /B/, le pressage génère une fente traversante (FT) suivant l'épaisseur, depuis une face de la matelassure, jusqu'à une face opposée, obtenue par thermoformage.

12. Procédé de fabrication d'une matelassure selon la revendication 11 dans lequel l'étape de fourniture /A/ comprend :
- /A1/ Extrusion d'un polymère thermoplastique dans une filière d'extrusion (6) comprenant des buses d'extrusion (60) réparties suivant une direction en longueur (X6) et suivant un direction en largeur (Y6) de la filière d'extrusion, générant un rideau de fibres continues fondues, chutant par gravité,
- /A2/ Réception du rideau de fibres continues fondues chutant par gravité sur un ou des élément support (7, 8) avec une génération d'un enchevêtrement 3D de fibres selon une répartition irrégulière avec fusion de boucles entre les fibres continues
- /A3/ éventuellement solidification de l'enchevêtrement 3D de fibres par immersion dans un liquide de refroidissement.

13. Procédé selon la revendication 11 ou 12, dans lequel le pressage à chaud en une ou plusieurs zones locales, de la matelassure entraîne une compression par une réduction partielle de l'épaisseur (EP) de l'enchevêtrement 3D en la zone locale, d'au moins 30% suivant l'épaisseur, voire d'au moins 40%, voire d'au moins 50%, voire d'au moins 60%, voire d'au moins 70%, voire d'au moins 80%, voire une réduction totale de l'enchevêtrement suivant l'épaisseur.

14. Matelassure de siège de véhicule susceptible d'être obtenue selon le procédé de l'une des revendications 11 à 13 comprenant un enchevêtrement 3D de fibres (5) continues thermoplastiques disposées irrégulièrement, formant des boucles soudées entre elles entre les fibres, et dans lequel :
- les fibres sont des fibres creuses et/ou fibres pleines, en particulier de diamètre compris entre 0,2 mm et 2 mm, préférentiellement entre 0,3 mm et 1,5 mm,
- les fibres (5) comprennent un polymère thermoplastique, la composition des fibres comprenant en particulier au moins 95% en poids de PET,
la matelassure comprenant une ou plusieurs zones locales densifiées et rigidifiées par pressage à chaud de l'enchevêtrement 3D
et dans laquelle l'enchevêtrement 3D de la matelassure (5) présente une masse volumique apparente comprise entre 20 kg/m³ et 70 kg/m³ en particulier entre 45 kg/m³ et 65 kg/m³ en dehors de la ou des zones locales (ZL) densifiées et rigidifiées,
et dans laquelle la matelassure comprenant une fente traversante (FT) suivant l'épaisseur, depuis une première face de la matelassure, jusqu'à une deuxième face, opposée, de la matelassure.

15. Siège de véhicule comprenant :
- une matelassure (3) selon la revendication 14
- une coiffe (CF) recouvrant la matelassure et fixée à la matelassure en la ou les zones locales densifiées et rigidifiées,
et dans lequel la coiffe (CF) est fixée par insertion d'une plaque de retenue (PQ) au travers la fente traversante (FT) de ka matelassure depuis la première face jusqu'à la seconde face, ou inversement, puis par pivotement de la plaque de retenue (PG) de sorte que la plaque vient s'appuyer sur la seconde face, de part et d'autre d'une embouchure de la fente.

16. Siège de véhicule comprenant une matelassure (3) comprenant un enchevêtrement 3D de fibres (5) continues thermoplastiques disposées irrégulièrement, formant des boucles soudées entre elles entre les fibres, et dans laquelle:
- les fibres sont des fibres creuses et/ou fibres pleines, en particulier de diamètre compris entre 0,2 mm et 2 mm, préférentiellement entre 0,3 mm et 1,5 mm,
- les fibres (5) comprennent un polymère thermoplastique, la composition des fibres comprenant en particulier au moins 95% en poids de PET,
la matelassure comprenant une ou plusieurs zones locales densifiées et rigidifiées par pressage à chaud de l'enchevêtrement 3D
et dans laquelle l'enchevêtrement 3D de la matelassure (5) présente une masse volumique apparente comprise entre 20 kg/m³ et 70 kg/m³ en particulier entre 45 kg/m³ et 65 kg/m³ en dehors de la ou des zones locales (ZL) densifiées et rigidifiées
la matelassure comprenant une ou plusieurs zones locales densifiées et rigidifiées par pressage à chaud de l'enchevêtrement 3D susceptible d'être obtenue selon un procédé de fabrication de matelassure de siège comprenant :
- /A/ Fourniture d'une matelassure (3) comprenant un enchevêtrement 3D de fibres thermoplastiques (5), continues disposées aléatoirement formant des boucles soudées entre elles,
- /B/ Pressage à chaud de l'enchevêtrement 3D de fibres en un ou plusieurs zones locales de l'enchevêtrement 3D de sorte à obtenir un ou des zones locales (ZL) de la matelassure densifiées et rigidifiées, la ou les zones locales étant configurées pour servir de zone de fixation, et dans lequel en /B/ le pressage est une étape de thermoformage réduisant partiellement l'épaisseur de l'enchevêtrement 3D en densifiant les fibres de l'enchevêtrement de la zone locale avec conservation des boucles de l'enchevêtrement 3D soudées entre elles en la zone locale (ZL)
et dans lequel la coiffe (CF) est fixée par l'intermédiaire d'un organe d'agrippage (AGP), comprenant par exemple en ensemble de crochets, et/ou un ou des pointes munie de crochets venant accrocher les boucles de la ou des zones locales (ZL) densifiées et rigidifiées.

## Patentansprüche

1. Verfahren zum Herstellen einer Fahrzeugsitzpolsterung (3), umfassend:
- /A/ Bereitstellen einer Polsterung (3), die eine 3D-Verflechtung aus thermoplastischen Endlosfasern (5) umfasst, die unregelmäßig angeordnet sind und miteinander heißverschweißte Schlaufen bilden,
- /B/ Heißpressen der 3D-Faserverflechtung zu einem oder mehreren lokalen 3D-Verflechtungsbereichen, um einen oder mehrere verdichtete, versteifte lokale Bereiche (ZL) der Polsterung zu erhalten, wobei der/die lokale(n) Bereich(e) konfiguriert ist/sind, um als Befestigungsbereich zu dienen,
und wobei in /B/ das Pressen ein Thermoformungsschritt ist, bei dem ein erstes Formteil (M1) und ein zweites Formteil (M2) die Fasern der 3D-Verflechtung des lokalen Bereichs in zwei elastische Lippen umformen, einschließlich:
- einer ersten Lippe (Lv1), die an dem lokalen Bereich mit einem ersten proximalen Ende an die Verflechtung angrenzt und ein erstes freies distales Ende aufweist und
- einer zweiten Lippe (Lv2), die an dem lokalen Bereich mit einem zweiten proximalen Ende an die Verflechtung angrenzt und ein zweites freies distales Ende aufweist,
und wobei die erste Lippe (Lv1) und die zweite Lippe (Lv2) zueinander ausgerichtet sind und ein erstes Schnappteil bilden, das konfiguriert ist, um ein zweites Schnappteil in einen Schlitz einzusetzen, der zwischen dem ersten und dem zweiten distalen Ende, die zu der ersten und der zweiten Lippe gehören, begrenzt ist.

2. Verfahren zum Herstellen einer Polsterung nach Anspruch 1, wobei der Schritt des Bereitstellens von /A/ umfasst:
- /A1/ Extrusion eines thermoplastischen Polymers in einem Extrusionswerkzeug (6), das Extrusionsdüsen (60) umfasst, die in einer Längsrichtung (X6) und entlang einer Breitenrichtung (Y6) des Extrusionswerkzeugs verteilt sind, wodurch ein Vorhang aus geschmolzenen Endlosfasern erzeugt wird, der durch Schwerkraft fällt,
- /A2/ Aufnehmen des Vorhangs aus geschmolzenen Endlosfasern, der durch Schwerkraft fällt, auf einem oder mehreren Stützelementen (7, 8), wobei eine 3D-Faserverflechtung gemäß einer unregelmäßigen Verteilung mit Schlaufen erzeugt wird, die zwischen den Endlosfasern schmelzen,
- /A3/ gegebenenfalls Verfestigen der 3D-Faserverflechtung mittels Eintauchen in eine Kühlflüssigkeit.

3. Verfahren nach Anspruch 1 oder 2, wobei das Heißpressen in einem oder mehreren lokalen Bereichen der Polsterung zu einer Kompression durch teilweises Reduzieren der Dicke (EP) der 3D-Verflechtung zu dem lokalen Bereich führt, und zwar um mindestens 30 % gemäß der Dicke oder sogar um mindestens 40 % oder sogar um mindestens 50 % oder sogar um mindestens 60 % oder sogar um mindestens 70 % oder sogar um mindestens 80 %, oder sogar zu einer vollständigen Reduzierung der Verflechtung entlang der Dicke.

4. Fahrzeugsitzpolsterung, die gemäß dem Verfahren nach einem der Ansprüche 1 bis 3 erhalten werden kann, umfassend eine 3D-Verflechtung aus thermoplastischen Endlosfasern (5), die unregelmäßig angeordnet sind, zwischen den Fasern heißversiegelte Schlaufen bilden, und wobei:
- die Fasern Hohlfasern und/oder Vollfasern insbesondere mit einem Durchmesser zwischen 0,2 mm und 2 mm, vorzugsweise zwischen 0,3 mm und 1,5 mm, sind,
- die Fasern (5) ein thermoplastisches Polymer umfassen, wobei die Zusammensetzung der Fasern zu mindestens 95 Gew.-% PET umfasst,
wobei die Polsterung einen oder mehrere Bereiche umfasst, die durch Heißpressen der 3D-Verflechtung verdichtet und versteift wurden,
und wobei die 3D-Verflechtung der Polsterung (5) eine scheinbare Dichte zwischen 20 kg/m³ und 70 kg/m³, insbesondere zwischen 45 kg/m³ und 65 kg/m³ außerhalb des/der verdichteten, versteiften Bereichs/Bereiche (ZL) aufweist,
und wobei die Polsterung in dem/den lokalen Bereich(en) umfasst:
- eine erste Lippe (Lv1), die an dem lokalen Bereich (ZL) mit einem ersten proximalen Ende an die Verflechtung angrenzt und ein erstes freies distales Ende aufweist und
- eine zweite Lippe (Lv2), die an dem lokalen Bereich (ZL) mit einem zweiten proximalen Ende an die Verflechtung angrenzt und ein zweites freies distales Ende aufweist,
und wobei die erste Lippe (Lv1) und die zweite Lippe (Lv2) zueinander ausgerichtet sind und ein erstes Schnappverschlussteil bilden.

5. Fahrzeugsitz, umfassend:
- eine Polsterung (3) nach Anspruch 4,
- eine Kappe (CF), die die Polsterung abdeckt und in dem einen oder den mehreren verdichteten, versteiften lokalen Bereichen an der Polsterung angebracht ist,
und wobei die Kappe durch ein zweites Schnappverschlussteil (CLP2) angebracht ist, das elastisch in einen zwischen der ersten Lippe (Lv1) und der zweiten Lippe (Lv2) begrenzten Schlitz eingesetzt ist.

6. Verfahren zum Herstellen einer Fahrzeugsitzpolsterung (3), umfassend:
- /A/ Bereitstellen einer Polsterung (3), die eine 3D-Verflechtung aus thermoplastischen Endlosfasern (5) umfasst, die unregelmäßig angeordnet sind und miteinander heißverschweißte Schlaufen bilden,
- /B/ Heißpressen der 3D-Faserverflechtung zu einem oder mehreren lokalen 3D-Verflechtungsbereichen, um einen oder mehrere verdichtete, versteifte lokale Bereiche (ZL) der Polsterung zu erhalten, wobei der/die lokale(n) Bereich(e) konfiguriert ist/sind, um als Befestigungsbereich zu dienen,
und wobei in /B/ das Pressen ein Thermoformungsschritt ist, bei dem ein erstes Formteil (M1) und ein zweites Formteil (M2) die Fasern der Verflechtung des lokalen Bereichs in ein Befestigungselement (Eac) umformen, das ein Zuganker ist, wobei sich das Befestigungselement quer zu dem lokalen Bereich erstreckt und mit zwei Enden des Befestigungselements (Eac) an die 3D-Verflechtung aus thermoplastischen Fasern angrenzt.

7. Verfahren nach Anspruch 6, wobei der Schritt des Bereitstellens von /A/ umfasst:
- /A1/ Extrusion eines thermoplastischen Polymers in einem Extrusionswerkzeug (6), das Extrusionsdüsen (60) umfasst, die in einer Längsrichtung (X6) und entlang einer Breitenrichtung (Y6) des Extrusionswerkzeugs verteilt sind, wodurch ein Vorhang aus geschmolzenen Endlosfasern erzeugt wird, der durch Schwerkraft fällt,
- /A2/ Aufnehmen des Vorhangs aus geschmolzenen Endlosfasern, der durch Schwerkraft fällt, auf einem oder mehreren Stützelementen (7, 8), wobei eine 3D-Faserverflechtung gemäß einer unregelmäßigen Verteilung mit Schlaufen erzeugt wird, die zwischen den Endlosfasern schmelzen,
- /A3/ gegebenenfalls Verfestigen der 3D-Faserverflechtung mittels Eintauchen in eine Kühlflüssigkeit.

8. Verfahren nach Anspruch 6 oder 7, wobei das Heißpressen in einem oder mehreren lokalen Bereichen der Polsterung zu einer Kompression durch teilweises Reduzieren der Dicke (EP) der 3D-Verflechtung zu dem lokalen Bereich führt, und zwar um mindestens 30 % gemäß der Dicke, oder sogar um mindestens 40 %, oder sogar um mindestens 50 %, oder sogar um mindestens 60 %, oder sogar um mindestens 70 %, oder sogar um mindestens 80 %, oder sogar zu einer vollständigen Reduzierung der Verflechtung entlang der Dicke.

9. Fahrzeugsitzpolsterung, die gemäß dem Verfahren nach einem der Ansprüche 6 bis 8 erhalten werden kann, umfassend eine 3D-Verflechtung aus thermoplastischen Endlosfasern (5), die unregelmäßig angeordnet sind, zwischen den Fasern heißversiegelte Schlaufen bilden, und wobei:
- die Fasern Hohlfasern und/oder Vollfasern insbesondere mit einem Durchmesser zwischen 0,2 mm und 2 mm, vorzugsweise zwischen 0,3 mm und 1,5 mm, sind,
- die Fasern (5) ein thermoplastisches Polymer umfassen, wobei die Zusammensetzung der Fasern zu mindestens 95 Gew.-% PET umfasst,
wobei die Polsterung einen oder mehrere Bereiche umfasst, die durch Heißpressen der 3D-Verflechtung verdichtet und versteift wurden,
und wobei die 3D-Verflechtung der Polsterung (5) eine scheinbare Dichte zwischen 20 kg/m³ und 70 kg/m³, insbesondere zwischen 45 kg/m³ und 65 kg/m³ außerhalb des/der verdichteten, versteiften Bereichs/Bereiche (ZL) aufweist,
und wobei die Polsterung in dem/den lokalen Bereich(en) ein Befestigungselement (Eac) umfasst, bei dem es sich um einen Zuganker handelt, der sich quer zu dem lokalen Bereich erstreckt und mit zwei Enden des Zugankers an die 3D-Verflechtung der thermoplastischen Fasern angrenzt.

10. Fahrzeugsitz, umfassend:
- eine Polsterung (3) nach Anspruch 9,
- eine Kappe (CF), die die Polsterung abdeckt und in dem einen oder den mehreren verdichteten, versteiften lokalen Bereichen an der Polsterung angebracht ist,
und wobei die Kappe (CF) durch Befestigen des Befestigungselements (Eac) angebracht wird.

11. Verfahren zum Herstellen einer Fahrzeugsitzpolsterung (3), umfassend:
- /A/ Bereitstellen einer Polsterung (3), die eine 3D-Verflechtung aus thermoplastischen Endlosfasern (5) umfasst, die unregelmäßig angeordnet sind und miteinander heißverschweißte Schlaufen bilden,
- /B/ Heißpressen der 3D-Faserverflechtung an einem oder mehreren lokalen 3D-Verflechtungsbereichen, um einen oder mehrere verdichtete, versteifte lokale Bereiche (ZL) der Polsterung zu erhalten, wobei der/die lokale(n) Bereich(e) konfiguriert ist/sind, um als Befestigungsbereich zu dienen,
und wobei in /B/ das Pressen einen durch Thermoformen erhaltenen Durchgangsschlitz (FT) entlang der Dicke von einer der Polsterung zu einer gegenüberliegenden Fläche erzeugt.

12. Verfahren zum Herstellen einer Polsterung nach Anspruch 11, wobei der Schritt des Bereitstellens von /A/ umfasst:
- /A1/ Extrusion eines thermoplastischen Polymers in einem Extrusionswerkzeug (6), das Extrusionsdüsen (60) umfasst, die in einer Längsrichtung (X6) und entlang einer Breitenrichtung (Y6) des Extrusionswerkzeugs verteilt sind, wodurch ein Vorhang aus geschmolzenen Endlosfasern erzeugt wird, der durch Schwerkraft fällt,
- /A2/ Aufnehmen des Vorhangs aus geschmolzenen Endlosfasern, der durch Schwerkraft fällt, auf einem oder mehreren Stützelementen (7, 8), wobei eine 3D-Faserverflechtung gemäß einer unregelmäßigen Verteilung mit Schlaufen erzeugt wird, die zwischen den Endlosfasern schmelzen,
- /A3/ gegebenenfalls Verfestigen der 3D-Faserverflechtung mittels Eintauchen in eine Kühlflüssigkeit.

13. Verfahren nach Anspruch 11 oder 12, wobei das Heißpressen in einem oder mehreren lokalen Bereichen der Polsterung zu einer Kompression durch teilweises Reduzieren der Dicke (EP) der 3D-Verflechtung zu dem lokalen Bereich führt, und zwar um mindestens 30 % gemäß der Dicke, oder sogar um mindestens 40 %, oder sogar um mindestens 50 %, oder sogar um mindestens 60 %, oder sogar um mindestens 70 %, oder sogar um mindestens 80 %, oder sogar zu einer vollständigen Reduzierung der Verflechtung entlang der Dicke.

14. Fahrzeugsitzpolsterung, die gemäß dem Verfahren nach einem der Ansprüche 11 bis 13 erhalten werden kann, umfassend eine 3D-Verflechtung aus thermoplastischen Endlosfasern (5), die unregelmäßig angeordnet sind, zwischen den Fasern heißversiegelte Schlaufen bilden, und wobei:
- die Fasern Hohlfasern und/oder Vollfasern insbesondere mit einem Durchmesser zwischen 0,2 mm und 2 mm, vorzugsweise zwischen 0,3 mm und 1,5 mm, sind,
- die Fasern (5) ein thermoplastisches Polymer umfassen, wobei die Zusammensetzung der Fasern zu mindestens 95 Gew.-% PET umfasst,
wobei die Polsterung einen oder mehrere Bereiche umfasst, die durch Heißpressen der 3D-Verflechtung verdichtet und versteift wurden,
und wobei die 3D-Verflechtung der Polsterung (5) eine scheinbare Dichte zwischen 20 kg/m³ und 70 kg/m³, insbesondere zwischen 45 kg/m³ und 65 kg/m³ außerhalb des/der verdichteten, versteiften Bereichs/Bereiche (ZL) aufweist,
und wobei die Polsterung einen Durchgangsschlitz (FT) entlang der Dicke von einer ersten Fläche der Polsterung zu einer zweiten gegenüberliegenden Fläche der Polsterung umfasst.

15. Fahrzeugsitz, umfassend:
- eine Polsterung (3) nach Anspruch 14,
- eine Kappe (CF), die die Polsterung abdeckt und in dem einen oder den mehreren verdichteten, versteiften lokalen Bereichen an der Polsterung angebracht ist,
und wobei die Kappe (CF) durch Einsetzen einer Rückhalteplatte (PQ) durch den Durchgangsschlitz (FT) der Polsterung von der ersten Fläche zur zweiten Fläche oder umgekehrt angebracht wird, dann die Rückhalteplatte (PG) geschwenkt wird, sodass die Platte auf der zweiten Fläche auf beiden Seiten einer Mündung des Schlitzes zum Anliegen kommt.

16. Fahrzeugsitz, umfassend eine Polsterung (3), umfassend eine 3D-Verflechtung aus zufällig angeordneten thermoplastischen Endlosfasern (5), die zwischen den Fasern heißversiegelte Schlaufen bilden, und wobei:
- die Fasern Hohlfasern und/oder Vollfasern insbesondere mit einem Durchmesser zwischen 0,2 mm und 2 mm, vorzugsweise zwischen 0,3 mm und 1,5 mm, sind,
- die Fasern (5) ein thermoplastisches Polymer umfassen, wobei die Zusammensetzung der Fasern zu mindestens 95 Gew.-% PET umfasst,
wobei die Polsterung einen oder mehrere Bereiche umfasst, die durch Heißpressen der 3D-Verflechtung verdichtet und versteift wurden,
und wobei die 3D-Verflechtung der Polsterung (5) eine scheinbare Dichte zwischen 20 kg/m³ und 70 kg/m³, insbesondere zwischen 45 kg/m³ und 65 kg/m³ außerhalb des/der verdichteten, versteiften Bereichs/Bereiche (ZL) aufweist,
wobei die Polsterung einen oder mehrere lokale Bereiche umfasst, die durch Heißpressen der 3D-Verflechtung verdichtet und versteift sind, und die gemäß einem Verfahren zum Herstellen einer Sitzpolsterung erhalten werden können, umfassend:
- /A/ Bereitstellen einer Polsterung (3), die eine 3D-Verflechtung aus thermoplastischen Endlosfasern (5) umfasst, die unregelmäßig angeordnet sind und miteinander heißverschweißte Schlaufen bilden,
- /B/ Heißpressen der 3D-Faserverflechtung an einem oder mehreren lokalen Bereichen der 3D-Verflechtung, um einen oder mehrere verdichtete, versteifte lokale Bereiche (ZL) der Polsterung zu erhalten, wobei der/die lokale(n) Bereich(e) konfiguriert ist/sind, um als Befestigungsbereich zu dienen, und wobei in /B/ das Pressen eine Thermoformschritt ist, der teilweise die Dicke der 3D-Verpflechtung durch Verdichten der Fasern der Verflechtung des lokalen Bereichs reduziert und gleichzeitig die Schlaufen der 3D-Verflechtung im lokalen Bereich (ZL) zusammen heißversiegelt hält,
und wobei die Kappe (CF) mittels eines Greifelements (AGP) angebracht wird, das zum Beispiel einen Satz Haken und/oder einen oder mehrere mit Haken versehene Dorne umfasst, die die Schlaufen des/der verdichteten und versteiften lokalen Bereichs/Bereiche (ZL) erfassen.

## Claims

1. A method for manufacturing a vehicle seat cushion (3) comprising:
- /A/ Providing a cushion (3) comprising a 3D entanglement of continuous thermoplastic fibers (5), arranged irregularly, forming loops heat-sealed together,
- /B/ Hot-pressing of the 3D entanglement of fibers into one or more local 3D entanglement areas so as to obtain one or more densified, stiffened local areas (ZL) of the cushion, the local area(s) being configured to serve as a fastening area
and wherein in /B/ the pressing is a thermoforming step during which a first mold part (M1) and a second mold part (M2) transform the fibers of the 3D entanglement of the local area into two elastic lips, including:
- a first lip (Lv1) adjoining the entanglement at the local area by a first proximal end and has a first free distal end and
- a second lip (Lv2) adjoining the entanglement at the local area by a second proximal end and has a second free distal end,
and wherein the first lip (Lv1) and the second lip (Lv2) are oriented towards each other, forming a first snap-fitting part configured to insert a second snap-fitting part into a slot delimited between the first and second distal ends belonging to the first lip and to the second lip.

2. The method for manufacturing a cushion according claim 1, wherein the step of providing /A/ comprises:
- /A1/ Extrusion of a thermoplastic polymer in an extrusion die (6) comprising extrusion nozzles (60) distributed in a lengthwise direction (X6) and along a widthwise direction (Y6) of the extrusion die, generating a curtain of continuous molten fibers, falling by gravity,
- /A2/ Receiving the curtain of continuous molten fibers falling by gravity on one or more support elements (7, 8) with a 3D entanglement of fibers being generated according to an irregular distribution with loops melting between the continuous fibers
- /A3/ optionally solidifying the 3D entanglement of fibers by immersion in a cooling liquid.

3. The method according to claim 1 or 2, wherein the hot pressing in one or more local areas of the cushion leads to a compression by partially reducing the thickness (EP) of the 3D entanglement into the local area, by at least 30% according to the thickness, or even by at least 40%, or even by at least 50%, or even by at least 60%, or even by at least 70%, or even by at least 80%, or even a total reduction of the entanglement along the thickness.

4. A vehicle seat cushion capable of being obtained according to the method of one of claims 1 to 3 comprising a 3D entanglement of continuous thermoplastic fibers (5) arranged irregularly, forming loops heat-sealed together between the fibers, and wherein:
- the fibers are hollow fibers and/or solid fibers, in particular with a diameter of between 0.2 mm and 2 mm, preferentially between 0.3 mm and 1.5 mm,
- the fibers (5) comprise a thermoplastic polymer, the composition of the fibers comprising at least 95% by weight of PET,
the cushion comprising one or more areas densified and stiffened by hot-pressing the 3D entanglement
and wherein the 3D entanglement of the cushion (5) has an apparent density of between 20 kg/m³ and 70 kg/m³, in particular between 45 kg/m³ and 65 kg/m³ outside the densified, stiffened local area(s) (ZL)
and wherein the cushion comprises, in the local area(s):
- a first lip (Lv1) adjoining the entanglement at the local area (ZL) by a first proximal end and has a first free distal end and
- a second lip (Lv2) adjoining the entanglement at the local area (ZL) by a second proximal end and has a second free distal end
and wherein the first lip (Lv1) and the second lip (Lv2) are oriented towards each other, forming a first snap-fitting part.

5. A vehicle seat comprising:
- a cushion (3) according to claim 4
- a cap (CF) covering the cushion and attached to the cushion in the densified, stiffened local area(s),
and wherein the cap is attached by a second snap-fitting part (CLP2) elastically inserted into a slot delimited between the first lip (Lv1) and the second lip (Lv2).

6. A method for manufacturing a vehicle seat cushion (3) comprising:
- /A/ Providing a cushion (3) comprising a 3D entanglement of continuous thermoplastic fibers (5), arranged irregularly, forming loops heat-sealed together,
- /B/ Hot-pressing of the 3D entanglement of fibers into one or more local 3D entanglement areas so as to obtain one or more densified, stiffened local areas (ZL) of the cushion, the local area(s) being configured to serve as a fastening area,
and wherein in /B/ the pressing is a thermoforming step during which a first mold part (M1) and a second mold part (M2) transform the fibers of the entanglement of the local area into a fastening element (Eac), which is a tie rod, said fastening element extending transversely to the local area, adjoining the 3D entanglement of thermoplastic fibers by two ends of said fastening element (Eac).

7. The method according to claim 6, wherein the step of providing /A/ comprises:
- /A1/ Extrusion of a thermoplastic polymer in an extrusion die (6) comprising extrusion nozzles (60) distributed in a lengthwise direction (X6) and along a widthwise direction (Y6) of the extrusion die, generating a curtain of continuous molten fibers, falling by gravity,
- /A2/ Receiving the curtain of continuous molten fibers falling by gravity on one or more support elements (7, 8) with a 3D entanglement of fibers being generated according to an irregular distribution with loops melting between the continuous fibers
- /A3/ optionally solidifying the 3D entanglement of fibers by immersion in a cooling liquid.

8. The method according to claim 6 or 7, wherein the hot pressing in one or more local areas of the cushion leads to a compression by partially reducing the thickness (EP) of the 3D entanglement into the local area, by at least 30% according to the thickness, or even by at least 40%, or even by at least 50%, or even by at least 60%, or even by at least 70%, or even by at least 80%, or even a total reduction of the entanglement along the thickness.

9. A vehicle seat cushion capable of being obtained according to the method of one of claims 6 to 8 comprising a 3D entanglement of continuous thermoplastic fibers (5) arranged irregularly, forming loops heat-sealed together between the fibers, and wherein:
- the fibers are hollow fibers and/or solid fibers, in particular with a diameter of between 0.2 mm and 2 mm, preferentially between 0.3 mm and 1.5 mm,
- the fibers (5) comprise a thermoplastic polymer, the composition of the fibers comprising at least 95% by weight of PET,
the cushion comprising one or more areas densified and stiffened by hot-pressing the 3D entanglement
and wherein the 3D entanglement of the cushion (5) has an apparent density of between 20 kg/m³ and 70 kg/m³, in particular between 45 kg/m³ and 65 kg/m³ outside the densified, stiffened local area(s) (ZL)
and wherein the cushion comprises, in the local area(s), a fastening element (Eac), which is a tie rod, extending transversely to the local area, adjoining the 3D entanglement of thermoplastic fibers by two ends of said tie rod.

10. A vehicle seat comprising:
- a cushion (3) according to claim 9
- a cap (CF) covering the cushion and attached to the cushion in the densified, stiffened local area(s)
and wherein the cap (CF) is attached by fastening said fastening element (Eac).

11. A method for manufacturing a vehicle seat cushion (3) comprising:
- /A/ Providing a cushion (3) comprising a 3D entanglement of continuous thermoplastic fibers (5), arranged irregularly, forming loops heat-sealed together,
- /B/ Hot-pressing the 3D fiber entanglement at one or more local areas of the 3D entanglement so as to obtain one or more densified and stiffened local areas (ZL) of the cushion, the local area(s) being configured to serve as a fastening area,
and wherein in /B/, the pressing generates a through-slot (FT) along the thickness, from one of the cushion to an opposite face, obtained by thermoforming.

12. The method for manufacturing a cushion according claim 11, wherein the step of providing /A/ comprises:
- /A1/ Extrusion of a thermoplastic polymer in an extrusion die (6) comprising extrusion nozzles (60) distributed in a lengthwise direction (X6) and along a widthwise direction (Y6) of the extrusion die, generating a curtain of continuous molten fibers, falling by gravity,
- /A2/ Receiving the curtain of continuous molten fibers falling by gravity on one or more support elements (7, 8) with a 3D entanglement of fibers being generated according to an irregular distribution with loops melting between the continuous fibers
- /A3/ optionally solidifying the 3D entanglement of fibers by immersion in a cooling liquid.

13. The method according to claim 11 or 12, wherein the hot pressing in one or more local areas of the cushion leads to a compression by partially reducing the thickness (EP) of the 3D entanglement into the local area, by at least 30% according to the thickness, or even by at least 40%, or even by at least 50%, or even by at least 60%, or even by at least 70%, or even by at least 80%, or even a total reduction of the entanglement along the thickness.

14. A vehicle seat cushion capable of being obtained according to the method of one of claims 11 to 13 comprising a 3D entanglement of continuous thermoplastic fibers (5) arranged irregularly, forming loops heat-sealed together between the fibers, and wherein:
- the fibers are hollow fibers and/or solid fibers, in particular with a diameter of between 0.2 mm and 2 mm, preferentially between 0.3 mm and 1.5 mm,
- the fibers (5) comprise a thermoplastic polymer, the composition of the fibers comprising at least 95% by weight of PET,
the cushion comprising one or more areas densified and stiffened by hot-pressing the 3D entanglement
and wherein the 3D entanglement of the cushion (5) has an apparent density of between 20 kg/m³ and 70 kg/m³, in particular between 45 kg/m³ and 65 kg/m³ outside the densified, stiffened local area(s) (ZL),
and wherein the cushion comprising a through-slot (FT) along the thickness, from a first face of the cushion, to a second opposite face of the cushion.

15. A vehicle seat comprising:
- a cushion (3) according to claim 14
- a cap (CF) covering the cushion and attached to the cushion in the densified, stiffened local area(s),
and wherein the cap (CF) is attached by inserting a retaining plate (PQ) through the through-slot (FT) of the cushion from the first face to the second face, or vice versa, then by pivoting the retaining plate (PG) so that the plate comes to bear on the second face, on both sides of a mouth of the slot.

16. The vehicle seat comprising a cushion (3) comprising a 3D entanglement of randomly arranged continuous thermoplastic fibers (5), forming loops heat-sealed together between the fibers, and wherein:
- the fibers are hollow fibers and/or solid fibers, in particular with a diameter of between 0.2 mm and 2 mm, preferentially between 0.3 mm and 1.5 mm,
- the fibers (5) comprise a thermoplastic polymer, the composition of the fibers comprising at least 95% by weight of PET,
the cushion comprising one or more areas densified and stiffened by hot-pressing the 3D entanglement
and wherein the 3D entanglement of the cushion (5) has an apparent density of between 20 kg/m³ and 70 kg/m³, in particular between 45 kg/m³ and 65 kg/m³ outside the densified, stiffened local area(s) (ZL)
the cushion comprising one or more local areas densified and stiffened by hot pressing of the 3D entanglement able to be obtained according to a method for manufacturing a seat cushion comprising:
- /A/ Providing a cushion (3) comprising a 3D entanglement of continuous thermoplastic fibers (5), arranged irregularly, forming loops heat-sealed together,
- /B/ Hot-pressing the 3D fiber entanglement at one or more local areas of the 3D entanglement so as to obtain one or more densified and stiffened local areas (ZL) of the cushion, the local area(s) being configured to serve as a fastening area, and wherein in /B/, the pressing is a thermoforming step partially reducing the thickness of the 3D entanglement by densifying the fibers of the entanglement of the local area while preserving the loops of the 3D entanglement heat-sealed together in the local area (ZL)
and wherein the cap (CF) is attached by means of a gripping member (AGP), comprising for example a set of hooks, and/or one or more spikes provided with hooks which catch the loops of the densified and stiffened local area(s) (ZL).
